# DEMANDE DE BREVET EUROPEEN

(11) **EP 4 645 642 A1**
(43) Date de publication de la demande: **05.11.2025**
(21) Numéro de dépôt: 25172501.6
(22) Date de dépôt: 25.04.2025
(51) Int. Cl.: H02J 7/00

(54) **PROCÉDÉ ET DISPOSITIF DE CONTRÔLE D'UNE BATTERIE D'ACCUMULATEURS ÉLECTROCHIMIQUES**

(30) Priorité: 26.04.2024 FR 2404358
(71) Demandeur: BHG, 68100 Mulhouse (FR)
(72) Inventeur: DELPY, Vincent, 68510 SIERENTZ (FR); FRITSCH, Thomas, 67800 HOENHEIM (FR)
(74) Mandataire: Cabinet Bleger-Rhein-Poupon

(57) **Abrégé**

Dispositif et procédé de contrôle d'une batterie d'accumulateurs électrochimiques, ladite batterie étant connectée en amont à une source d'énergie apte à la charger et en aval à un dispositif qu'elle alimente, comprenant les étapes de :
- déconnexion de la batterie de la source d'énergie ;
- mesure de la tension à vide de la batterie ;
- comparaison de ladite tension à vide avec un seuil de tension supérieur prédéterminé ;
- si la tension à vide est supérieure à ce seuil, déconnexion de la batterie du dispositif en aval ;
- sinon, connexion de la batterie au dispositif en aval ; et
- connexion de la batterie à la source d'énergie.

## Description

L'invention relève très généralement du domaine de l'utilisation de batteries d'accumulateurs électrochimiques, notamment de batteries au lithium, et a plus particulièrement trait au contrôle de telles batteries en vue de vérifier leur compatibilité et aptitude à assurer le fonctionnement correct d'une installation, l'issue du contrôle devant être l'inhibition de toute possibilité de fonctionnement si le contrôle effectué s'avère négatif. En d'autres termes, l'objectif de l'invention est de sécuriser le remplacement d'une batterie ou d'un pack de batteries dans un dispositif autonome, en interdisant le fonctionnement si le modèle de batterie inséré n'est pas techniquement adapté au circuit de gestion dudit dispositif. Dans cette optique, en prenant l'exemple de l'alimentation par batteries d'un moteur de volet roulant, incluant l'alimentation de son unité de pilotage, il est prévu d'interdire la commande du moteur si la batterie de remplacement n'est pas d'un type autorisé, c'est-à-dire validée comme étant techniquement compatible avec le mode de pilotage prévu.

Le type de batterie initialement fourni - par exemple par le constructeur - avec un dispositif autonome est adapté à son usage, et comporte notamment des caractéristiques de charge spécifiques pour un fonctionnement normal dans une plage de température donnée. Or, avec un même format extérieur et des dimensions très proches, voire identiques, on peut trouver sur le marché plusieurs types de batteries aux propriétés qui ne sont pas, pour autant, adaptées. Le risque d'erreur pour un usager non averti n'est donc pas négligeable, sachant que les conséquences d'un choix erroné peuvent aller du simple dysfonctionnement à un départ de feu ou à une explosion. On note d'ailleurs que les cellules ou accumulateurs de batterie les plus facilement disponibles sur le marché, et souvent les moins onéreuses, sont aussi celles qui présentent le plus de risques en cas de mésusage.

La solution la plus couramment utilisée pour remédier à ce problème a consisté à emballer les accumulateurs/cellules à l'intérieur d'un pack fermé dans une coque plastique ou dans une gaine thermo-rétractable en y intégrant de surcroît une électronique de contrôle (dite BMS). L'unité de contrôle électronique prévue, par exemple sous forme d'une carte électronique, a notamment pour fonction de garantir que les accumulateurs de la batterie ne subissent pas de surcharges dommageables. L'accès aux accumulateurs, c'est-à-dire aux éléments individuels de la batterie, est alors impossible sans découper la coque ou la gaine enfermant le pack. Pour limiter encore tout risque d'usage d'une batterie non conforme, une étiquette est le plus souvent apposée sur le pack, informant l'utilisateur que la batterie doit être impérativement remplacée par un modèle identique. Un détrompage supplémentaire peut de plus être assuré par une connectique spécifique, qui impose de facto le modèle de la batterie de remplacement.

Cette approche présente cependant quelques inconvénients :
- l'adjonction d'un module électronique de contrôle inclus dans le pack batterie renchérit la solution, à cause d'abord du coût de montage et d'assemblage du module proprement dit, et ensuite aussi du fait qu'il peut comporter certains composants électroniques redondants car utilisables aussi bien dans le module que pour le pilotage du dispositif final qu'elle alimente (composants de mesure de courant ou de tension, organe de calcul de type microcontrôleur, etc.), et qu'il faut alors doubler ;
- le remplacement des batteries usagées s'accompagne inévitablement du remplacement de l'électronique de contrôle, même si celle-ci est en général toujours fonctionnelle ;
- le volume occupé par la batterie est alors sensiblement plus important que le volume additionné des accumulateurs qui composent le pack.

Pour éviter ces inconvénients, d'abord et principalement en vue de réduire les coûts mais également pour faciliter le recyclage des batteries usagées, on a relocalisé les fonctions liées au contrôle électronique de la batterie sur la carte électronique principale de pilotage et de commande du dispositif final. Cela conduit à une réduction du nombre de composants électroniques nécessaires et à une simplification de la conception du pack de batterie, qui se trouve de facto réduit à un regroupement d'accumulateurs équipé d'un dispositif de connexion. Dans ce cas, on rend cependant à nouveau accessibles les accumulateurs de la batterie, et cela n'interdit plus à l'utilisateur de tenter de les remplacer lui-même lorsqu'ils sont usagés. Or, on a vu que s'il utilise des éléments différents de ceux fournis ou recommandés par le constructeur, les conséquences peuvent être désastreuses.

Plus précisément, par exemple, si la nature et la structure chimique de la batterie de remplacement sont différentes de celles de la batterie d'origine, la tension maximale admissible en charge n'est dans nombre de cas plus compatible avec le mode de pilotage résultant de l'électronique en place, d'où un risque de surcharge. A contrario, une batterie rechargée à un niveau trop bas ne permet pas un fonctionnement normal du dispositif. Pire, la remise en charge d'une batterie par exemple au lithium dont la tension à vide est vraiment très basse peut conduire à une inversion de polarité. Enfin, si la température de fonctionnement dépasse les préconisations de la batterie de remplacement, un emballement thermique de cette dernière peut se produire et générer un départ de feu.

L'objectif de la présente invention est de s'affranchir de ces multiples problèmes en proposant une solution simple et fiable permettant d'inhiber le fonctionnement de l'appareil alimenté par la batterie (par exemple un moteur de volet roulant) si la batterie de remplacement choisie n'est pas d'un type compatible avec l'application envisagée.

A cet effet, l'invention concerne d'abord un procédé de contrôle d'une batterie d'accumulateurs électrochimiques, ladite batterie étant connectée en amont à une source d'énergie apte à la charger et en aval à un dispositif qu'elle alimente, procédé qui est tel, selon l'invention, qu'il comprend les étapes suivantes :
- déconnexion de la batterie de la source d'énergie ;
- mesure de la tension à vide de la batterie ;
- comparaison de ladite tension à vide avec un seuil de tension supérieur prédéterminé ;
- si la tension à vide est supérieure à ce seuil, déconnexion de la batterie du dispositif en aval ;
- sinon, connexion de la batterie au dispositif en aval ; et
- connexion de la batterie à la source d'énergie.

Lorsque la tension à vide est mesurée au-delà du seuil supérieur de tension prédéterminé, mémorisé dans des moyens de contrôle de la tension de la batterie qui peuvent être inclus dans une unité électronique de pilotage par exemple d'un moteur de volet roulant (exemple qui sera continûment utilisé dans la suite), le résultat est considéré comme non concluant au sens des objectifs de l'invention, et le logiciel ou la logique électronique de ladite unité de pilotage interdit le fonctionnement du moteur et/ou la mise en charge de la batterie. Le défaut de fonctionnement du moteur est considéré comme une information, à l'adresse de l'utilisateur, de l'absence de conformité de la batterie qu'il tente d'implanter.

Selon une possibilité additionnelle, deux seuils distincts peuvent être utilisés dans le procédé de contrôle. Outre le seuil supérieur mentionné ci-dessus, un seuil inférieur peut être mis en œuvre. Dans ce cas, le procédé comporte les étapes supplémentaires suivantes :
- si la tension à vide est inférieure au seuil de tension supérieur prédéterminé, comparaison de ladite tension à vide avec un seuil de tension inférieur prédéterminé ;
- si la tension à vide est inférieure à ce seuil, déconnexion de la batterie du dispositif en aval ;
- sinon, connexion de la batterie au dispositif en aval ; et
- connexion de la batterie à la source d'énergie.

Le fonctionnement correct est alors considéré non plus par rapport à un seul seuil, mais en réalité par rapport à une plage de fonctionnement, ce qui est plus restrictif : dès lors que la batterie de remplacement n'est pas dans l'intervalle défini par les seuils respectivement supérieur et inférieur, le système - en fait les moyens de contrôle de la tension du système - en déduit l'absence de conformité de la batterie dont l'implantation est tentée, et empêche le fonctionnement normal.

De préférence, selon le précédé de l'invention, après la déconnexion de la batterie de la source d'énergie, l'activation d'une temporisation de stabilisation de la tension à vide de la batterie est déclenchée. Compte tenu de l'importance de la mesure de la tension à vide dans le procédé, il est en effet souhaitable de laisser passer les phénomènes transitoires résultant éventuellement de la déconnexion initiale.

La présente invention couvre également un dispositif de contrôle d'une batterie d'accumulateurs électrochimiques pour la mise en œuvre du procédé décrit ci-dessus, tel qu'il comporte :
- une source d'énergie ;
- des moyens de contrôle de la tension de la batterie ;
- des moyens de connexion de la batterie aux moyens de contrôle de la tension de la batterie ;
- un premier étage de commutation entre la source d'énergie en amont et la batterie d'accumulateurs ; et
- un second étage de commutation entre la batterie d'accumulateur et le dispositif en aval,
- les moyens de contrôle de la tension de la batterie comportant :
   ∘ des moyens de mesure de la tension aux bornes de la batterie d'accumulateur ;
   ∘ des moyens de comparaison de ladite tension avec au moins un seuil de tension prédéterminée ;
   ∘ des moyens de mémoriser le ou les seuils de tension ; et
   ∘ deux sorties raccordées respectivement au premier étage de commutation et au second étage de commutation.

Selon une première variante, les moyens de mesure de la tension à vide peuvent consister en au moins un convertisseur analogique-numérique. La tension appliquée à l'entrée analogique du convertisseur est par conséquent transformée en une valeur numérique. Dans ce cas, de préférence, chaque convertisseur analogique-numérique peut être relié à un microcontrôleur effectuant la comparaison et dont des sorties sont raccordées respectivement au premier étage de commutation et au second étage de commutation. Dans le procédé propre à l'invention, selon les résultats de la comparaison, la charge de la batterie pourra être empêchée, ainsi que le fonctionnement du dispositif en aval, par exemple un moteur d'entraînement de volet roulant.

Dans une seconde variante, les moyens de comparaison peuvent consister en au moins un comparateur analogique. Leur nombre dépend de la nature du traitement qui est effectué, à savoir par rapport à un unique seuil supérieur ou à un intervalle borné par deux seuils. Les signaux issus du ou des comparateurs étant analogiques, un traitement analogique leur est bien entendu appliqué. Selon une possibilité préférentielle, la sortie de chaque comparateur peut être reliée, via un étage de logique combinatoire combinant la sortie des comparateurs, à une bascule logique dont des sorties sont raccordées respectivement au premier étage de commutation et au second étage de commutation. Les signaux en sortie de la bascule logique, selon leur niveau binaire, permettent ou empêchent la charge de la batterie et l'alimentation du dispositif respectivement en fermant ou en ouvrant les dispositifs de commutation.

Selon une autre variante encore, qui combine certains aspects des deux solutions ci-dessus, la sortie de chaque comparateur peut être reliée à un microcontrôleur réalisant la ou les comparaisons et dont des sorties sont raccordées respectivement au premier étage de commutation et au second étage de commutation.

Dans l'invention, par ailleurs, l'étage de commutation est de préférence constitué d'un relais ou d'au moins un transistor, qui reçoit le signal issu d'une des sorties des moyens de contrôle, et ouvre ou ferme la voie fonctionnelle principale du circuit de l'invention, à savoir la connexion d'alimentation par la batterie du dispositif en aval et la connexion de charge de la batterie par la source d'énergie en amont de cette dernière.

Il est à noter que les moyens de contrôle de la tension de la batterie peuvent de plus comporter un système d'avertissement visuel et/ou sonore activé en cas de non-conformité de la batterie. L'utilisateur est ainsi clairement et immédiatement informé du problème, ce qui renforce l'information du système.

Par ailleurs, selon une configuration préférentielle dont les raisons ont été évoquées auparavant, les moyens de contrôle de la tension de la batterie peuvent être placés sur une carte électronique de pilotage du dispositif aval alimenté par la batterie. Celle-ci est alors séparée du pack de batterie, et comporte - outre des composants propres au pilotage du dispositif dans l'application envisagée - les composants de gestion et de contrôle de la possibilité de charge de la batterie, composants dont on a mentionné qu'ils peuvent parfois également être utilisés dans le pilotage du dispositif aval, par exemple un moteur électrique de volet roulant, ce qui permet d'éviter les redondances fonctionnelles.

L'invention sera mieux comprise à l'aide de la description détaillée suivante du procédé et de dispositifs de contrôle d'une batterie d'accumulateurs électrochimiques selon l'invention, en référence aux dessins annexés pour lesquels :
[Fig. 1] illustre la problématique résolue par l'invention en présentant une courbe de tension à vide d'un accumulateur lithium de technologie LFP (LiFePO₄) en fonction de son taux de charge ;
[Fig. 2] complète la compréhension du problème par la présentation d'une courbe de tension à vide d'un accumulateur lithium de technologie NMC (LiNiMnCO₂) en fonction de son taux de charge ;
[Fig. 3] représente un organigramme détaillant les étapes du procédé selon la présente invention ;
[Fig. 4] montre un schéma synoptique d'une première variante du dispositif de mise en oeuvre du procédé de la figure précédente ;
[Fig. 5] représente un schéma synoptique d'une seconde variante dudit dispositif ; et
[Fig. 6] illustre, selon un même schéma synoptique, une variante dudit dispositif combinant les variantes des figures 2 et 3.

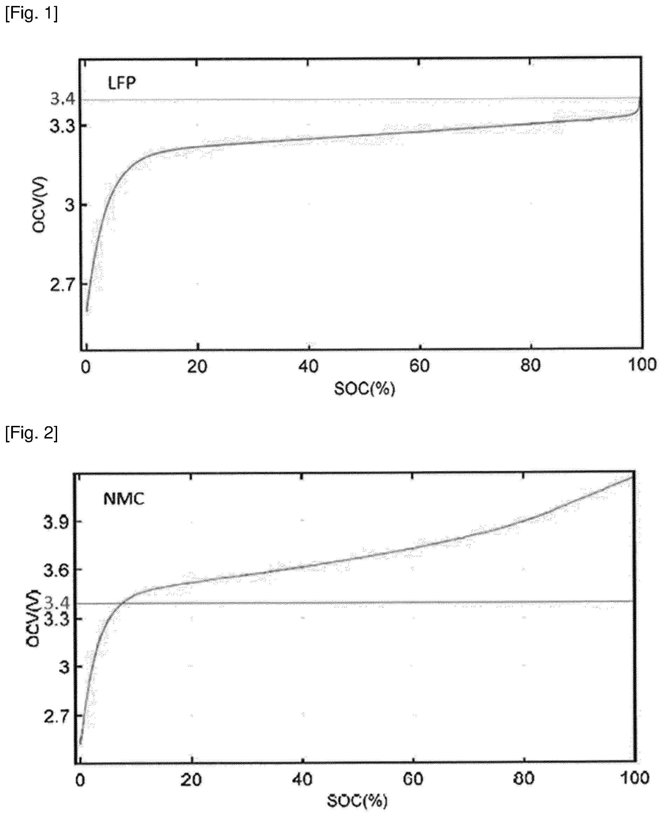

En référence aux figures 1 et 2, qui aident à formaliser la problématique technique à la base de la présente invention, des exemples de courbes de tension à vide en fonction du taux de charge (SOC) de deux technologies différentes d'une cellule lithium sont montrés dans lesdites figures. La courbe de la figure 1 concerne des batteries de technologie LFP (LiFePO₄), alors que la courbe de la figure 2 relève de batteries de technologie NMC (LiNiMnCoO₂). Il s'agit de deux technologies distinctes pour lesquelles on voit que les réponses de charge sont assez différentes. Une cellule lithium neuve est en général chargée à au moins 30% de sa capacité totale, et la tension à vide (VOC) se trouve donc sur le plateau montant de la courbe. A 30% de charge, on est autour de 3,25 V pour le LFP contre plus de 3,5 V pour le NMC. Un seuil intermédiaire de 3,4 V permet donc de discriminer le type de batterie au moment de la connexion de celle-ci. Dans ce cas, pour éviter qu'une batterie de technologie NMC soit connectée par erreur sur un dispositif alimenté normalement par une batterie de technologie LFP, on prendra par exemple comme seuils de tensions respectivement minimal et maximal Umin = 2 V et Umax = 3,4 V. Dans le cas inverse, on prendrait par exemple des seuils respectivement minimal et maximal Umin = 3,4 V et Umax = 4,2 V.

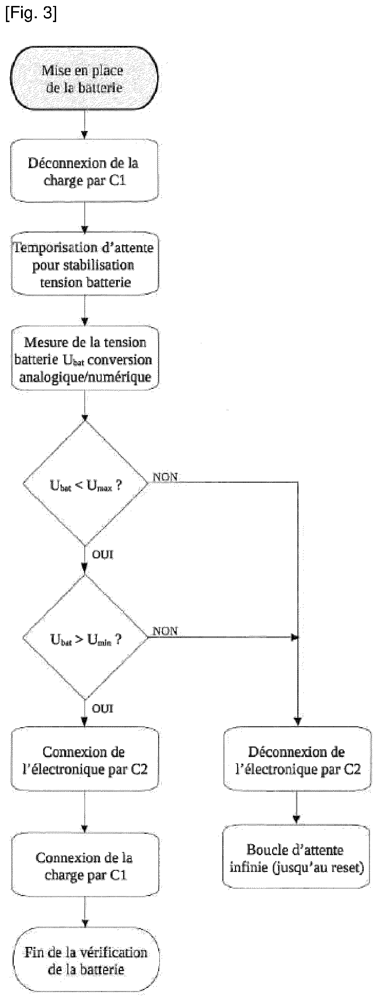

En référence à la figure 3, le procédé de l'invention déroule bien la totalité des différentes étapes possibles visant à contrôler la « conformité » d'une batterie d'accumulateurs à l'emploi qui en est prévu, en commençant par une déconnexion de la batterie de la source d'alimentation suivie d'une temporisation visant à stabiliser la tension de la batterie lorsqu'elle est déconnectée. Dès que la temporisation est écoulée, on procède à la mesure de sa tension à vide, qui constitue en quelque sorte l'aune essentielle à partir de laquelle le reste du traitement se développe. Il s'agit d'abord de la comparaison de ladite tension à vide avec un seuil de tension supérieur prédéterminé et, si la tension à vide est supérieure à ce seuil, on effectue une déconnexion de la batterie du dispositif en aval, par exemple le moteur d'entraînement d'un volet roulant, parce que les moyens de contrôle considèrent alors que la batterie utilisée n'est pas adaptée. Elle ne correspond pas aux standards techniques posés par les concepteurs. Dans la version extensive du procédé, celle qui apparaît en figure 3, une seconde comparaison est effectuée.

Il s'agit cette fois de la comparaison de la tension à vide de la batterie avec un seuil de tension inférieur prédéterminé et, si la tension à vide est inférieure à ce seuil, le système impose une déconnexion de la batterie du dispositif en aval. Si l'issue de ces deux tests conduit à la conclusion que la tension à vide est comprise entre le seuil supérieur et le seuil inférieur, une double connexion est effectuée, au dispositif en aval et à la source d'énergie en amont. En d'autres termes, la batterie installée est validée comme étant conforme aux spécificités techniques attendues.

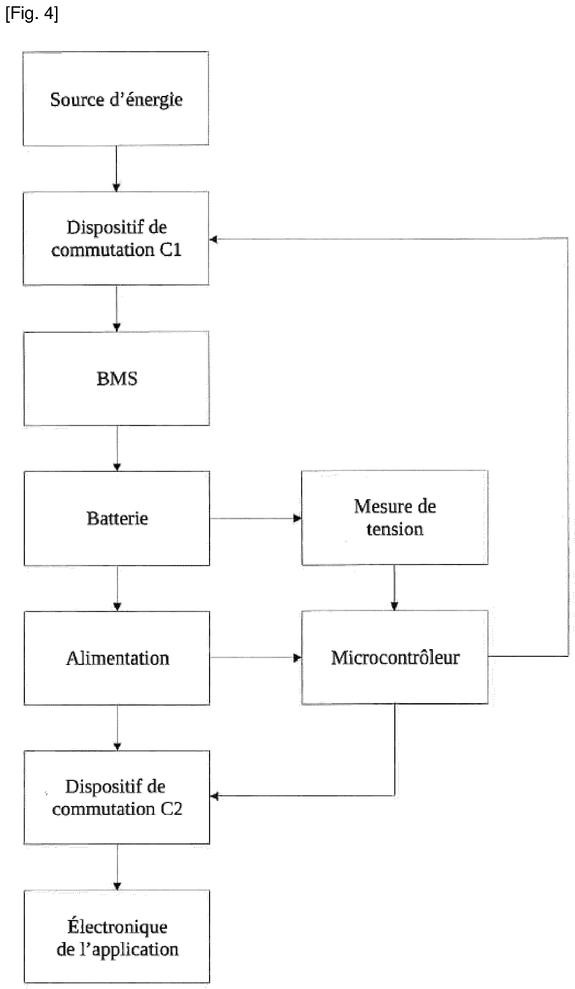

En référence à la figure 4, selon une approche plus structurelle et dans une première possibilité de réalisation, que l'on a dénommée auparavant première variante, on dispose de deux dispositifs de commutation C1 et C2 respectivement placés en aval d'une source d'énergie et en amont du dispositif de l'application, un moteur électrique d'entraînement d'un volet roulant dans l'exemple déjà mentionné. On effectue une mesure de la tension à vide de la batterie au moment de son insertion ou de sa connexion sur une carte électronique comportant un circuit ou système de gestion de charge de batterie (BMS), et un microcontrôleur qui effectue au moins une comparaison avec une valeur seuil mémorisée pour vérifier que la valeur mesurée est comprise dans une plage prédéfinie, ou simplement inférieure à un seuil maximal. La mesure de tension est assurée par un convertisseur analogique-numérique. Si le résultat est non concluant, le logiciel du microcontrôleur interdira d'une part la mise en charge de la batterie et d'autre part le fonctionnement du dispositif. Dans la structure de la figure 4, cela se traduit par des signaux émis en sortie du microcontrôleur à destination des dispositifs ou étages de commutation (relais ou transistor(s)...) C1 et C2. Deux sorties distinctes du microcontrôleur sont en pratique reliées aux deux commutateurs C1 et C2, dont au moins C2 est ouvert si le résultat des tests est négatif. Dans ce cas, l'application ne fonctionne pas, et l'usager est ainsi informé du problème. Comme évoqué auparavant, un dispositif d'avertissement supplémentaire tel qu'un voyant ou un signal sonore peut être ajouté pour renforcer l'information.

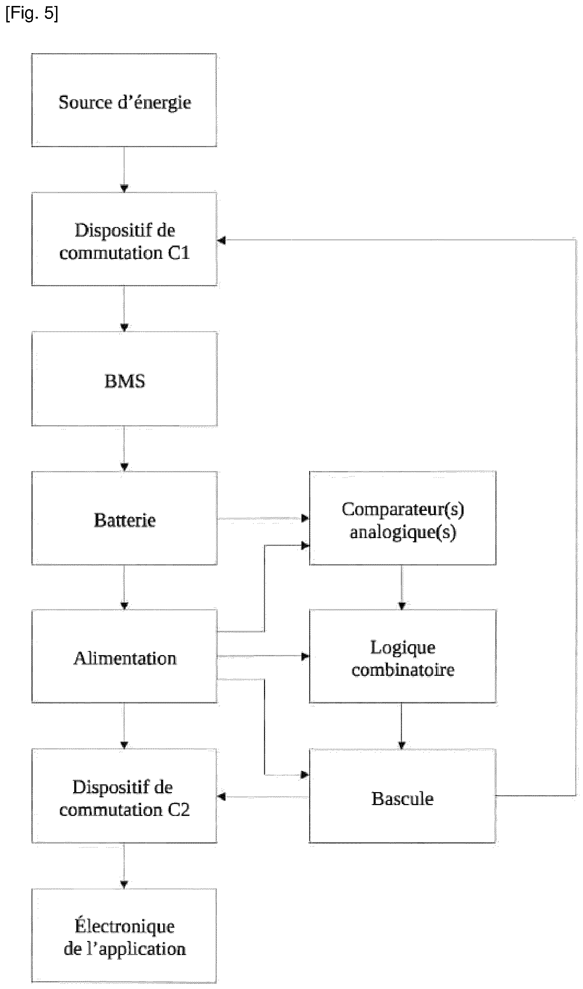

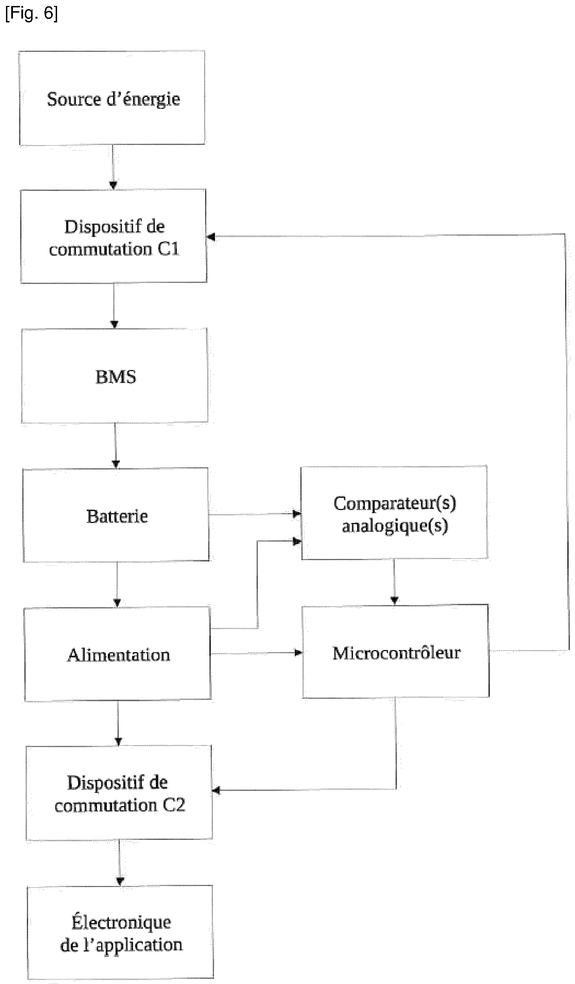

Les figures 5 et 6 montrent des variantes dans lesquelles la structure de base du dispositif de contrôle de la batterie d'accumulateurs de l'invention reste la même, seuls les moyens de mesure de la tension à vide de la batterie et les moyens de traitement (comparaison...) changent. La structure de base est celle qui apparaît dans la succession de blocs disposés en ligne à la gauche des figures 4 à 6, les modifications prenant place dans les dérivations placées sur la droite desdites figures. Ainsi, en figure 5, la valeur de la tension à vide, paramètre analogique, est traité par un comparateur analogique dont la sortie binaire est envoyée à une bascule logique commandant l'ouverture ou la fermeture des dispositifs de commutation C1 et C2, via des connexions distinctes. S'il y a une double comparaison, par conséquent avec deux seuils, un étage de logique combinatoire (voir en figure 5) est nécessaire pour combiner les signaux issus des deux comparateurs et refléter correctement à l'entrée de la bascule logique l'état combiné des sorties des deux comparateurs analogiques. La figure 6 propose une structure qui combine celles des deux figures 4 et 5 : le comparateur est analogique mais l'étage de traitement, qui effectue la comparaison, est un microcontrôleur.

Dans la description qui précède, selon une application possible qui n'est pas exhaustive de l'invention, la batterie peut être destinée à alimenter le moteur d'entraînement d'un élément mobile de fermeture, d'occultation, de protection solaire ou d'écran, par exemple un volet motorisé. Le procédé et les dispositifs de l'invention concernent de manière générale les batteries d'accumulateurs électrochimiques, notamment les batteries au lithium dont des exemples précis ont été mentionnés, qui sont destinées à être chargée par connexion à une source d'énergie externe et, par exemple, à alimenter en énergie électrique le moteur électrique d'entraînement d'un tel élément mobile. La présente invention ne se limite par ailleurs pas au type de batterie explicitement mentionné auparavant dans la description ou indiqué sur les figures 1 et 2, mais peut s'appliquer à tout type de batterie d'accumulateurs électrochimiques.

## Revendications

1. Procédé de contrôle d'une batterie d'accumulateurs électrochimiques, ladite batterie étant connectée en amont à une source d'énergie apte à la charger et en aval à un dispositif qu'elle alimente, comprenant les étapes suivantes :
- déconnexion de la batterie de la source d'énergie ;
- mesure de la tension à vide de la batterie ;
- comparaison de ladite tension à vide avec un seuil de tension supérieur prédéterminé ;
- si la tension à vide est supérieure à ce seuil, déconnexion de la batterie du dispositif en aval ;
- sinon, connexion de la batterie au dispositif en aval ; et
- connexion de la batterie à la source d'énergie.

2. Procédé de contrôle d'une batterie d'accumulateurs électrochimiques selon la revendication précédente, **caractérisé en ce que** :
- si la tension à vide est inférieure au seuil de tension supérieur prédéterminé, comparaison de ladite tension à vide avec un seuil de tension inférieur prédéterminé ;
- si la tension à vide est inférieure à ce seuil, déconnexion de la batterie du dispositif en aval ;
- sinon, connexion de la batterie au dispositif en aval ; et
- connexion de la batterie à la source d'énergie.

3. Procédé de contrôle d'une batterie d'accumulateurs électrochimiques selon l'une des revendications précédentes, **caractérisé en ce que**, après la déconnexion de la batterie de la source d'énergie, l'activation d'une temporisation de stabilisation de la tension à vide de la batterie est déclenchée.

4. Dispositif de contrôle d'une batterie d'accumulateurs électrochimiques pour la mise en œuvre du procédé selon les revendications précédentes, **caractérisé en ce qu'**il comporte :
- une source d'énergie ;
- des moyens de contrôle de la tension de la batterie ;
- des moyens de connexion de la batterie aux moyens de contrôle de la batterie ;
- un premier étage (C1) de commutation entre la source d'énergie en amont et la batterie d'accumulateurs ; et
- une second étage (C2) de commutation entre la batterie d'accumulateur et le dispositif en aval,
- les moyens de contrôle de la tension de la batterie comportant :
• des moyens de mesure de la tension aux bornes de la batterie d'accumulateur ;
• des moyens de comparaison de ladite tension avec au moins un seuil de tension prédéterminée ;
• des moyens de mémoriser le ou les seuils de tension ; et
• deux sorties raccordées respectivement au premier étage (C1) de commutation et au second étage (C2) de commutation.

5. Dispositif de contrôle d'une batterie d'accumulateurs électrochimiques selon la revendication précédente, **caractérisé en ce que** les moyens de mesure de la tension à vide consistent en au moins un convertisseur analogique-numérique.

6. Dispositif de contrôle d'une batterie d'accumulateurs électrochimiques selon la revendication précédente, **caractérisé en ce que** le convertisseur analogique-numérique est relié à un microcontrôleur effectuant la comparaison et dont des sorties sont raccordées respectivement au premier étage (C1) de commutation et au second étage (C2) de commutation.

7. Dispositif de contrôle d'une batterie d'accumulateurs électrochimiques selon la revendication 4, **caractérisé en ce que** les moyens de comparaison consistent en au moins un comparateur analogique.

8. Dispositif de contrôle d'une batterie d'accumulateurs électrochimiques selon la revendication précédente, **caractérisé en ce que** la sortie de chaque comparateur est reliée, via un étage de logique combinatoire combinant la sortie des comparateurs, à une bascule logique dont des sorties sont raccordées respectivement au premier étage (C1) de commutation et au second étage (C2) de commutation.

9. Dispositif de contrôle d'une batterie d'accumulateurs électrochimiques selon la revendication 7, **caractérisé en ce que** la sortie de chaque comparateur est reliée à un microcontrôleur réalisant la ou les comparaisons et dont des sorties sont raccordées respectivement au premier étage (C1) de commutation et au second étage (C2) de commutation.

10. Dispositif de contrôle d'une batterie d'accumulateurs électrochimiques selon l'une des revendications 4 à 9, **caractérisé en ce que** l'étage de commutation (C1, C2) est constitué d'un relais ou d'au moins un transistor.

11. Dispositif de contrôle d'une batterie d'accumulateurs électrochimiques selon l'une des revendications 4 à 10, **caractérisé en ce que** les moyens de contrôle de la tension de la batterie comportent un système d'avertissement visuel et/ou sonore activé en cas de non-conformité de la batterie.

12. Dispositif de contrôle d'une batterie d'accumulateurs électrochimiques selon l'une des revendications 4 à 11, **caractérisé en ce que** les moyens de contrôle de la tension de la batterie sont placés sur une carte électronique de pilotage du dispositif aval alimenté par la batterie.
